# EUROPÄISCHE PATENTSCHRIFT

(11) **EP 0 824 950 B1**
(45) Veröffentlichungstag und Bekanntmachung des Hinweises auf die Patenterteilung: **20.11.2002**
(21) Anmeldenummer: 97104265.0
(22) Anmeldetag: 13.03.1997
(51) Int. Cl.: B01D 46/52, B01D 29/01

(54) **Filtereinsatz**
Filter insert
Elément filtrant

(30) Priorität: 13.08.1996 DE 19632618
(43) Veröffentlichungstag der Anmeldung: 25.02.1998
(73) Patentinhaber: Carl Freudenberg KG, 69469 Weinheim (DE)
(72) Erfinder: Schlör, Ulrich, 64297 Darmstadt (DE); Michaelis, Udo, Weiterstadt (DE); Knudsen, Joergen, 74918 Angelbach (DE)

(56) Entgegenhaltungen:
- DE-A- 3 818 972
- DE-A- 4 202 769
- DE-A- 19 524 677
- GB-A- 2 266 673

## Beschreibung

Die Erfindung betrifft einen Filtereinsatz mit einem aus einem Filterwerkstoff bestehenden Faltenpack, der mit einem Filterrahmen verbunden wit.

Ein Filtereinsatz ist aus der DE 42 02 769 A1 bekannt. Der vorbekannte Filtereinsatz besteht aus einem zick-zack-förmig gefalteten und schmelzbaren Bahnenmaterial mit an den Stirnseiten geschlossenen Falten, der an den Rändern zur Abtrennung eines stromab liegenden Reinraums dicht in ein Gehäuse einsetzbar ist. Die Stirnseiten der Falten sind zu vergrößerten Stirnflächen geformt, auf die ein Dichtmaterial aufbringbar ist, wobei die vergrößerten Stirnflächen durch aufschmelzen und stauchen des Filterbahnenmaterials erzeugt sind. Die Stirnflächen der Stirnkanten der Falten bilden einen rahmenartig geschlossenen Verbund. Auf den Verbund wird als Randabdichtung ein Dichtstreifen aus elastischem Material, beispielsweise einem Schaumstoff aufgeklebt, der den Filtereinsatz außenseitig rundum umschließt. Die Verklebung des Verbunds mit dem Dichtstreifen erfolgt beispielsweise mit einer dichten und durchgehenden Klebeschicht auf der dem Verbund zugewandten Seite des Dichtstreifens.

Ein weiterer Filtereinsatz ist aus DE-A-195 24 677 bekannt. Ein X-förmiger oder balkenförmiger Strang ist im Zentrum eines wellenförmigen Filtermaterials eingebracht, wodurch zwangsläufig Überstände als Filtermaterial vorliegen. Der Filtereinsatz ist außerdem umfangsseitig mit einem Rahmen dichtend verbunden, der ein Filtergehäuse unter Vorspannung dichtend berührt.

Der Erfindung liegt die Aufgabe zugrunde, einen Filtereinsatz der vorbekannten Art derart weiterzuentwickeln, daß es zur Abdichtung des Filtereinsatzes gegenüber dem Gehäuse einer separat erzeugten und mit dem Faltenpack verbundenen Dichtung nicht mehr bedarf und daß die Herstellung des Filterrahmens sowie dessen Verbindung mit dem Faltenpack vereinfacht wird.

Nach des Erfindung wird hierzu ein Filtereinsatz bereigestellt,der die Merkmale des Patentanspruchs 1 aufweist. Hierbei ist von Vorteil, daß die Herstellung des Filterrahmens sowie dessen Verbindung mit dem Faltenpack in nur einem Arbeitsgang erfolgt. Der Werkstoff des Filterrahmens wird durch Spritzgießen in die Falten des Faltenpacks eingebracht, wobei der Werkstoff im Anschluß an die Einbringung in die Falten durch Abkühlung verfestigt wird. Die Abkühlung kann beispielsweise allmählich dadurch erfolgen, daß der Filterrahmen der Umgebungstemperatur ausgesetzt wird.

Der gesamte umfangseitige Rand des Faltenpacks übergreift die äußeren Begrenzungsflächen des Filterrahmens dichtend und ist als Dichtung ausgebildet. Einer separat erzeugten und durch einen zusätzlichen Arbeitsschritt mit dem Faltenpack verbundenen Dichtung zur Abdichtung des Filtereinsatzes gegenüber einem Gehäuse bedarf es daher nicht. Der Werkstoff, aus dem der Faltenpack besteht, wird daher sowohl als Filtermedium als auch als Dichtung verwendet. Die Abdichtung zum Gehäuse erfolgt durch Um- oder Anlegen des umlaufenden Überstands des Faltenpacks. Der erfindungsgemäße Filtereinsatz besteht lediglich aus nur zwei voneinander abweichenden Materialien, nämlich den Werkstoffen aus denen der Faltenpack und der Filterrahmen besteht. Durch Um- oder Anlegen des Überstands entsteht eine Dichtfläche, die mit der Innenwand des Filtergehäuses in dichtenden Eingriff bringbar ist.

Der Faltenpack besteht bevorzugt aus einem plissiertem Vliesstoff. Der Filterrahmen ist in sich geschlossen ausgebildet und besteht bevorzugt aus einem an den Faltenpack angespritzten polymeren Werkstoff. Der Vliesstoff kann beispielsweise triboelektrisch aufgeladen sein, um die Filtereigenschafen sowie die Bindung der ausgefilterten Partikel an den Filterwerkstoff zu verbessern.

Durch den unmittelbar an den Faltenpack angespritzten Filterrahmen ist sowohl die Herstellung des Filtereinsatzes als auch dessen Handhabung besonders einfach. Der Faltenpack und der Filterrahmen bilden eine einstückig ineinander übergehende, vormontierbare Einheit. Dadurch, daß der Werkstoff, aus dem der Filterrahmen besteht, im fließfähigen Zustand in die Falten des Faltenpacks eingespritzt wird, ergibt sich eine dichte und ausserordentlich haltbare Verbindung von Faltenpack und Filterrahmen aneinander. Im Anschluß an seine Aushärtung ist der Filterrahmen zähhart.

Die Längsseiten des Filterrahmens sind kammartig ausgebildet und weisen eine an die Form der Falten angepaßte, kongruente Gestalt auf. Die der Richtung des anströmenden Mediums zugewandten Faltenrücken sind vom Filterrahmen übergriffen. Die Reinluftseite wird gegenüber der Anströmseite des Filtereinsatzes durch die umfangseitigen Ränder des Faltenpacks, die als Dichtung ausgebildet sind, abgedichtet. Dadurch, daß die Längsseiten des Filterrahmens an den die Falten begrenzenden Faltenwänden jeweils anliegen, werden die Falten in ihrer Position zueinander gehalten.

Die Stirnseiten des Filterrahmens verbinden die Längsseiten und sind in den stirnseitigen Abschlußfalten des Faltenpacks angeordnet. Die stirnseitigen Faltenwände des Faltenpacks, die einen Bestandteil der Abschlußfalten bilden, liegen während der bestimmungsgemäßen Verwendung des Filtereinsatzes unter elastischer Vorspannung an der Innenwand eines Filtergehäuses an. Auf vorteilhafte Ausgestaltungen nehmen die Ansprüche 2 - 5 Bezug

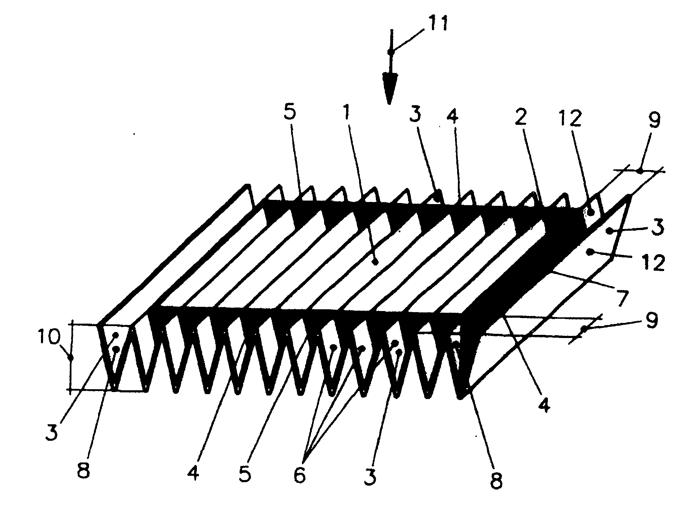

Ein Ausführungsbeispiel des erfindungsgemäßen Filtereinsatzes ist in der Zeichnung gezeigt und wird im folgenden näher beschrieben.

In der Zeichnung ist ein Ausführungsbeispiel eines Filtereinsatzes gezeigt, der im wesentlichen aus dem Faltenpack 1 und dem Filterrahmen 2 besteht. Der Faltenpack 1 besteht aus einem plissierten Vliesstoff, wobei auf der der Anströmrichtung 11 zugewandten Seite des Faltenpacks 1 der Filterrahmen 2 in den Falten 6 angeordnet ist. Der Werkstoff, aus dem der Filterrahmen 2 besteht, ist in einem Spritzgießprozess direkt in die Falten gespritzt. Nach der Verfestigung des Rahmenmaterials hält der Filterrahmen 2 den Faltenpack 1 insgesamt in Form und die einzelnen Falten 6 im vorbestimmten Abstand zueinander. Die Abdichtung gegenüber einem hier nicht dargestellten Filtergehäuse erfolgt durch den Rand 3 des Faltenpacks 1, der als Überstand 9 ausgebildet ist und die äußeren Begrenzungsflächen 4 des Filterrahmens 2 übergreift. Die Abdichtung zum Filtergehäuse erfolgt durch Um- oder Anlegen des umlaufenden Überstands 9.

## Patentansprüche

1. Filtereinsatz mit einem aus einem Filterwerkstoff bestehenden Filterpack (1), der mit einem Filterrahmen (2) verbunden ist, **dadurch gekennzeichnet, daß** der gesamte umfangsseitige Rand (3) des Faltenpacks (1) die äußeren Begrenzungsflächen (4) des Filterrahmens (2) dichtend übergreift, wobei die Abdichtung zum Filtergehäuse durch Um- oder Anlegen des umlaufenden Überstands (9) erfolgt, und daß die Breite des Überstands (9), mit der der Faltenpack (1) die Begrenzungsflächen (4) übergreift, der Höhe (10) des Faltenpacks (1) entspricht.

2. Filtereinsatz nach Anspruch 1, **dadurch gekennzeichnet, daß** der Faltenpack (1) aus einem plissierten Vliesstoff besteht.

3. Filtereinsatz nach Anspruch 1 oder 2, **dadurch gekennzeichnet, daß** der Filterrahmen (2) in sich geschlossen ausgebildet ist, und aus einem an den Faltenpack (1) angespritzten polymeren Werkstoff besteht.

4. Filtereinsatz nach einem der Ansprüche 1 bis 3, **dadurch gekennzeichnet, daß** die Längsseiten (5) des Filterrahmens (2) kammartig ausgebildet sind und eine an die Form der Falten (6) angepaßte, kongruente Gestalt aufweisen.

5. Filtereinsatz nach einem der Ansprüche 1 bis 4, **dadurch gekennzeichnet, daß** die Stirnseiten (7) des Filterrahmens (2) die Längsseiten (5) verbinden und in den stirnseitigen Abschlußfalten (8) des Faltenpacks (1) angeordnet sind.

## Claims

1. A filter insert comprising a fold pack (1) which is composed of a filter material and is connected to a filter frame (2), **characterized in that** the entire peripheral edge (3) of the fold pack (1) sealingly projects beyond the outer bounding faces (4) of the filter frame (2), the seal with the filter housing being the result of the surrounding rim (9) being turned over or laid up, and **in that** the width of the rim (9), by which the fold pack (1) projects beyond the bounding faces (4), is equal to the height (10) of the fold pack (1).

2. A filter insert according to claim 1, **characterized in that** the fold pack (1) comprises a pleated nonwoven.

3. A filter insert according to claim 1 or 2, **characterized in that** the filter frame (2) is closed in itself and is composed of a polymeric material injection moulded onto the fold pack (1).

4. A filter insert according to any one of claims 1 to 3, **characterized in that** the longitudinal sides (5) of the filter frame (2) have a comb-like construction and a congruent shape conformed to the shape of the folds (6).

5. A filter insert according to any one of claims 1 to 4, **characterized in that** the end sides (7) of the filter frame (2) connect the longitudinal sides (5) and are disposed in the end-side final folds (8) of the fold pack (1).

## Revendications

1. Garniture de filtre comprenant un paquet de plis (1) formé d'un matériau de filtre qui est relié à un cadre de filtre (2), **caractérisée en ce que** l'ensemble du bord (3) du paquet de filtre (1), situé sur la circonférence, empiète de manière étanche sur les surfaces de limitation extérieures (4) du cadre de filtre (2), l'étanchéité par rapport au boîtier du filtre étant obtenue en repliant la partie saillante (9) périphérique ou en la mettant en contact, et **en ce que** la largeur de la partie saillante (9) avec laquelle le paquet de plis (1) empiète sur les surfaces de limitation (4) correspond à la hauteur (10) du paquet de plis (1).

2. Garniture de filtre selon la revendication 1, **caractérisée en ce que** le paquet de plis (1) est formé d'un non-tissé plissé.

3. Garniture de filtre selon l'une des revendications 1 ou 2, **caractérisée en ce que** le cadre de filtre (2) est exécuté de manière autonome et est formé d'une matière polymère injectée sur le paquet de plis (1).

4. Garniture de filtre selon l'une des revendications 1 à 3, **caractérisée en ce que** les côtés longitudinaux (5) du cadre de filtre (2) sont exécutés à la manière d'un peigne et ont une forme congruente adaptée à la forme des plis (6).

5. Garniture de filtre selon l'une des revendications 1 à 4, **caractérisée en ce que** les côtés frontaux (7) du cadre de filtre (2) relient les côtés longitudinaux (5) et sont situés dans les plis de terminaison frontaux (8) du paquet de plis (1).
